# EUROPEAN PATENT APPLICATION

(11) **EP 3 192 577 A1**
(43) Date of publication of application: **19.07.2017**
(21) Application number: 14901798.0
(22) Date of filing: 11.09.2014
(51) Int. Cl.: B01D 37/04, B01D 36/02, B01D 61/04, B01D 61/08, C02F 1/44

(54) **WATER TREATMENT APPARATUS AND WATER TREATMENT METHOD**

(71) Applicant: Mitsubishi Heavy Industries, Ltd., Tokyo 108-8215 (JP)
(72) Inventor: YOKOHAMA, Katsuhiko, Tokyo 108-8215 (JP); NAGAI, Masahiko, Tokyo 108-8215 (JP); TABATA, Masayuki, Tokyo 108-8215 (JP); ITO, Yoshiaki, Tokyo 108-8215 (JP); KAKIGAMI, Hidemasa, Tokyo 108-8215 (JP); TAKEUCHI, Kazuhisa, Tokyo 108-8215 (JP); OKINO, Susumu, Tokyo 108-8215 (JP); NAGAYASU, Hiromitsu, Tokyo 108-8215 (JP); IWAHASHI, Hideo, Tokyo 108-8215 (JP); MATSUI, Katsunori, Yokohama-shi Kanagawa 220-8401 (JP); HORI, Takayoshi, Yokohama-shi Kanagawa 220-8401 (JP)
(74) Representative: Henkel, Breuer & Partner
(86) International application number: PCT/JP2014/074134
(87) International publication number: WO 2016/038726

(57) **Abstract**

Provided are a water treatment apparatus and a water treatment method capable of performing a significant water quality evaluation of treated water before the filtration process, and capable of rapidly responding to a change in water quality of the treated water. A water treatment apparatus 1 of the present invention includes a treated water filtering unit 11 which filters treated water W₁ supplied from a treated water line L₁ to become filtered water W₂, a filtered water mixing unit 14 which is provided in a treated water extraction line L₄ diverging from the treated water line L₁ to reduce a turbidity concentration in the treated water W₁ of the treated water extraction line L₄ to become measured water W₅, and a water quality measuring unit 15 which is provided at a rear stage of the filtered water mixing unit 14 in the treated water extraction line L₄ and measures water quality of the measured water W₅ to evaluate the water quality of the treated water W₁.

## Description

### Field

The present invention relates to a water treatment apparatus and a water treatment method. For example, the present invention relates to a water treatment apparatus including a filtering unit which filters treated water and a water treatment method.

### Background

Conventionally, a desalination apparatus which obtains fresh water by filtering sea water with a reverse osmosis membrane (RO membrane) is used. In such a desalination apparatus, degradation of the performance of the reverse osmosis membrane due to pollutant contained in the sea water is prevented, by charging a flocculant or the like into the sea water before filtering the sea water with the reverse osmosis membrane to filter turbidity. In the desalination apparatus using such a reverse osmosis membrane, a technique of controlling the operation, using a silt density index (SDI) value as a water quality evaluation index value, as an index for evaluating the quality of sea water filtered with the reverse osmosis membrane (for example, see Patent Literatures 1 to 3) is suggested.

### Citation List

### Patent Literature

Patent Literature 1: Japanese Patent No. 2755182
Patent Literature 2: Japanese Patent No. 4666600
Patent Literature 3: Japanese Laid-open Patent Publication No. 2006-55818

### Summary

### Technical Problem

Incidentally, in the water treatment apparatus using the reverse osmosis membrane, in some cases, concentration of pollutant may be high in sea water before filtration, and appropriate water quality evaluation cannot be performed with the water quality evaluation index value such as SDI value. For this reason, the SDI value of the sea water after filtering the turbidity using the filtering device is measured, the amount of the flocculant to be charged to the filtering device is adjusted based on the measured SDI value of the sea water, and the water quality of sea water filtered with the reverse osmosis membrane is kept within a predetermined reference range.

However, in the case of measuring the water quality of the sea water after filtration using the filtering device and keeping the water quality of the sea water within the predetermined reference range, when the water quality of the sea water deviates from the reference range, the operation of reducing the amount of pollutant such as increase in the amount of flocculant charged into the filtering device is not enough, the reverse osmosis membrane may be contaminated or the stop of the operation of the water treatment apparatus may be required in some cases.

The present invention has been made in view of such circumstances, and an object of the present invention is to provide a water treatment apparatus and a treatment method capable of evaluating a significant water quality of treated water before the filtration process and capable of rapidly responding to a change in water quality of the treated water.

### Solution to Problem

A water treatment apparatus comprising: a treated water filtering unit which filters treated water to be supplied from a treated water line to become filtered water; a pretreatment unit which is provided in a treated water extraction line diverging from the treated water line to reduce a turbidity concentration in the treated water of the treated water extraction line to become measured water; and a first water quality measuring unit which is provided at a rear stage of the pretreatment unit in the treated water extraction line to measure the water quality of the measured water and evaluate the water quality of the treated water.

According to the water treatment apparatus, since the water quality is measured using the measured water in which the turbidity concentration of the treated water is reduced, it is possible to perform the significant water quality evaluation which reflects the water quality of the treated water before the filtration process. As a result, since the water treatment apparatus can rapidly change the filtration condition of the treated water filtering unit depending on the change in water quality of the treated water, the water quality of the filtered water can be stabilized.

In the water treatment apparatus according to present invention, it is preferable that further comprising: a reverse osmosis membrane filtering unit which filters the filtered water with a reverse osmosis membrane to obtain permeable water and concentrated water. With this configuration, since it is possible to rapidly change the filtration condition of the treated water filtering unit depending on the change in the water quality of the treated water, the water quality of the filtered water can be stabilized, and contamination of the reverse osmosis membrane can be prevented.

In the water treatment apparatus according to present invention, it is preferable that the pretreatment unit is a filtered water mixing unit which mixes the filtered water with the treated water to convert the treated water into the measured water. With this configuration, since the measured water in which the turbidity concentration is reduced can be obtained merely by mixing the treated water with the filtered water, the measured water can be easily prepared.

In the water treatment apparatus according to present invention, it is preferable that the measured water is a mixture of the treated water and the filtered water such that the treated water has 5 volume% or more and 60 volume% or less. With this configuration, since the turbidity concentration of the measured water is in an appropriate range, it is possible to perform the more significant water quality evaluation of the treated water before the filtration process using the measured water.

In the water treatment apparatus according to present invention, it is preferable that the pretreatment unit is a solid-liquid separation unit which performs solid-liquid separation of the liquid in the treated water and the turbidity in the treated water to convert the treated water into the measured water. With this configuration, since the measured water in which the turbidity concentration is reduced can be obtained merely by performing the solid-liquid separation of the treated water, the measured water can be easily prepared.

In the water treatment apparatus according to present invention, it is preferable that the solid-liquid separation unit has a separation efficiency of the turbidity of 60% or more. With this configuration, since the turbidity concentration of the measured water is in an appropriate range, it is possible to more significantly measure the water quality of the treated water before filtration process using the measured water.

In the water treatment apparatus according to present invention, it is preferable that the pretreatment unit is a sand filtering unit which converts the treated water into the measured water, by sand filtration in which a filtration rate is relatively higher than the treated water filtering unit. With this configuration, since the treated water is rapidly filtered to obtain the measured water with the reduced turbidity concentration, the measured water can be easily prepared.

In the water treatment apparatus according to present invention, it is preferable that the pretreatment unit is a treated water purifying unit which reduces turbidity in the treated water by bubbling to convert the treated water into the measured water. With this configuration, since the measured water in which the turbidity concentration is reduced can be obtained only by performing bubbling, the measured water can be easily prepared.

In the water treatment apparatus according to present invention, it is preferable that further comprising: a flocculant charging unit which charges a flocculant into the treated water; a second water quality measuring unit which measures the water quality of the filtered water; and a control unit which controls a charging amount of the flocculant, based on the water quality of the treated water evaluated by the first water quality measuring unit and the water quality of the filtered water measured by the second water quality measuring unit. With this configuration, the charging amount of the flocculant is controlled based on the water quality of the treated water measured with the measured water. Accordingly, it is possible to rapidly control the charging amount of flocculant depending on the change in the water quality of the treated water, and it is possible to prevent a disadvantage of the reverse osmosis membrane caused by a change in the water quality of the measured water. Further, since the charging amount of the flocculant can be corrected based on the water quality measured with the filtered water, it is possible to prevent the excessive charging of the flocculant.

A water treatment method comprising: reducing a turbidity concentration in treated water of a treated water extraction line diverging from a treated water line to become measured water; measuring the water quality of the measured water to evaluate the water quality of the treated water; controlling a charging amount of an flocculant to the treated water based on the evaluated water quality of the treated water; and measuring the water quality of the filtered water obtained by filtering the treated water of the treated water line to control a charging amount of the flocculant to the treated water.

According to this method, since the charging amount of the flocculant is controlled based on the water quality of the treated water measured with the measured water, the charging amount of the flocculant can be rapidly controlled depending on the change in the water quality of the treated water, and it is possible to prevent a disadvantage of the reverse osmosis membrane caused by a change in water quality of the measured water. Further, since the charging amount of the flocculant can be corrected based on the water quality measured with the filtered water, it is possible to prevent the excessive charging of the flocculant.

### Advantageous Effects of Invention

According to the present invention, it is possible to achieve a water treatment apparatus and a water treatment method capable of evaluating a significant water quality of treated water, and capable of rapidly responding to a change in water quality of treated water.

### Brief Description of Drawings

FIG. 1 is a schematic view of a water treatment apparatus according to a first embodiment of the present invention.
FIG. 2 is a diagram illustrating a relation between the concentration of treated water in the measured water and a SDI value.
FIG. 3 is a diagram illustrating a relation between the concentration of treated water in the measured water and a SFF value.
FIG. 4 is a schematic view of a water treatment apparatus according to a second embodiment of the present invention.
FIG. 5 is a schematic view of a water treatment apparatus according to a third embodiment of the present invention.
FIG. 6 is a schematic view of a water treatment apparatus according to a fourth embodiment of the present invention.
FIG. 7 is a schematic view of a water treatment apparatus according to a fifth embodiment of the present invention.
FIG. 8 is a flowchart of a water treatment method according to the fifth embodiment of the present invention.
FIG. 9 is a schematic view of a water treatment apparatus according to a sixth embodiment of the present invention.
FIG. 10 is a schematic view of a water treatment apparatus according to a seventh embodiment of the present invention.
FIG. 11 is a schematic view of a water treatment apparatus according to an eighth embodiment of the present invention.

### Description of Embodiments

The present inventors have noticed that, in a conventional desalination apparatus which desalinates sea water, it is not possible to measure an appropriate water quality evaluation index value in sea water having high turbidity concentration, and the SDI value is measured using filtered water after filtration process to control the operation of the desalination apparatus. Further, the inventors have found that, by using the sea water in which the turbidity concentration is reduced by subjecting the sea water before the filtration process to predetermined pretreatment, it is possible to measure the water quality evaluation index value of the sea water even by using the sea water before the filtration process, and as a result, it is possible to detect the change in the water quality of the sea water at an early stage to stabilize the water quality of the filtered water, thereby completing the present invention.

Hereinafter, embodiments of the present invention will be described in detail with reference to the accompanying drawings. The present invention is not limited to the embodiments described below, and can be achieved with appropriate modifications. Further, each of the following embodiments can be achieved by appropriate combination. In addition, common constituent elements in each embodiment are denoted by the same reference numerals, and the repeated description thereof will not be provided.

### (First Embodiment)

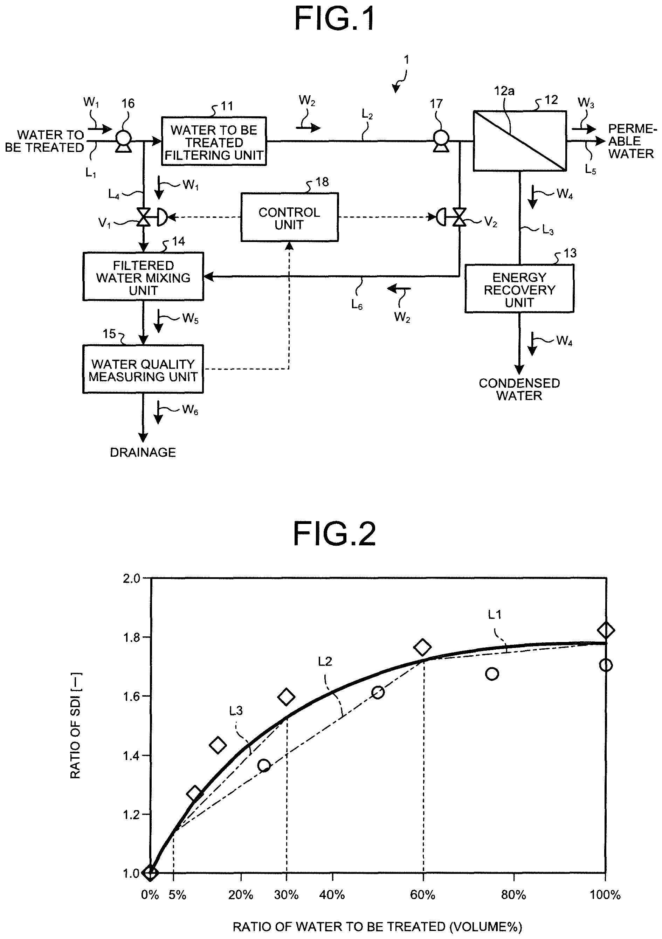

FIG. 1 is a schematic view of a water treatment apparatus according to a first embodiment of the present invention. As illustrated in FIG. 1, a water treatment apparatus 1 according to the present embodiment is a water treatment apparatus which obtains permeable water W₃ and concentrated water W₄, by filtering filtered water W₂ which is obtained by filtering treated water W₁ with a treated water filtering unit 11, with a reverse osmosis membrane 12a of the reverse osmosis membrane filtering unit 12. There are no particular restrictions on the treated water W₁, and for example, it is possible to use sea water, river water, lake water, ground water, municipal sewage, brackish water, industrial water, industrial wastewater, and water obtained by performing treatment such as aggregation, precipitation, filtration, adsorption, biological treatment on the water.

The water treatment apparatus 1 according to this embodiment includes: a treated water filtering unit 11 to which the treated water W₁ is supplied from a treated water line L₁; a reverse osmosis membrane filtering unit 12 provided in a filtered water line L₂ of a rear stage of the treated water filtering unit 11; an energy recovery unit 13 provided in a concentrated water line L₃ of a rear stage of the reverse osmosis membrane filtering unit 12; a filtered water mixing unit (pretreatment unit) 14 provided in a treated water extraction line L₄ diverging from the treated water line L₁ to extract some of the treated water W₁; and a water quality measuring unit (first water quality measuring unit) 15 provided at a rear stage of the filtered water mixing unit 14.

The treated water W₁ is supplied to the treated water filtering unit 11 from the treated water line L₁ by a liquid feeding pump 16. The treated water filtering unit 11 filters the treated water W₁ to provide filtered water W₂ from which turbidity in the treated water W₁ is removed. For example, as the treated water filtering unit 11, it is possible to use a dual media filter (DMF) in which anthracite with coarse particle diameter and silica sand with small particle diameter are laminated and the particle diameter gradually decreases toward the lower layer.

In the treated water filtering unit 11, pH of the filtered water W₂ is adjusted by an acid such as H₂SO₄ and HCl as necessary to become a predetermined value (for example, pH 7.2 or less). By adjusting the pH in this manner, it is possible to reduce disadvantage such as contamination (fouling) of the reverse osmosis membrane 12a of the reverse osmosis membrane filtering unit 12 due to turbidity in the treated water W₁.

The pressed filtered water W₂ is supplied to the reverse osmosis membrane filtering unit 12 from the filtered water line L₂, by a high-pressure pump 17. The reverse osmosis membrane filtering unit 12 includes the reverse osmosis membrane 12a which transmits the filtered water W₂ supplied from the treated water filtering unit 11 to become the permeable water W₃ and to become the concentrated water W₄ in which salinity and the like in the treated water W₁ are concentrated. The reverse osmosis membrane filtering unit 12 discharges the concentrated water W₄ from the concentrated water line L₃ and discharges the permeable water W₃ from the permeable water line L₅.

A filter member such as a micro cartridge filter may be additionally provided between the treated water filtering unit 11 and the reverse osmosis membrane filtering unit 12. By making the filtered water W₂ flow through the filter member, it is possible to remove fine particles which affect contamination of the reverse osmosis membrane 12a of the reverse osmosis membrane filtering unit 12.

Between the filtered water line L₂, which extends between the treated water filtering unit 11 and the reverse osmosis membrane filtering unit 12, and the filtered water mixing unit 14, a filtered water supply line L₆ which supplies the filtered water W₂ to the filtered water mixing unit 14 is provided. Further, a filter member may be provided in the filtered water supply line L₆ as necessary.

The energy recovery unit 13 recovers the energy of the high-pressure concentrated water W₄ pressed by the high-pressure pump 17. The energy recovered by the energy recovery unit 13 is used as, for example, energy for driving the high-pressure pump 17 and energy for converting the pressure of the filtered water W₂ into high pressure. Thus, the water treatment apparatus 1 can improve the energy efficiency of the entire water treatment apparatus 1.

For example, as the energy recovery unit 13, it is possible to use a pelton wheel type energy recovery device, a turbocharger type energy recovery device, a pressure exchanger (PX) type energy recovery device, a dual work energy exchanger (DWEER) type energy recovery device, or the like.

The filtered water mixing unit 14 mixes the treated water W₁ extracted from the treated water extraction line L₄ diverging from the treated water line L₁ and the filtered water W₂ supplied from the filtered water supply line L₆ to produce measured water W₅ in which the turbidity concentration is reduced. The measured water W₅ obtained in the filtered water mixing unit 14 is sent to the water quality measuring unit 15.

The water quality measuring unit 15 measures the water quality of the measured water W₅ to calculate the water quality evaluation index value and evaluates the water quality of the treated water W₁ based on the calculated water quality evaluation index value. Examples of the water quality evaluation index value include a silt density index (SDI) value, a soluble fouling factor (SFF) value and the like. The SDI value is a value measured by the method specified in ASTM D4189-95. The SDI value is obtained by filtering the treated water W₁ using a filter sheet having a mesh opening of 0.45 µm and finding the time for filtering a predetermined amount to measure the amount of pollutant of the treated water W₁. The SFF value is measured on the basis of the measuring method described in JP 4931039 B and the like.

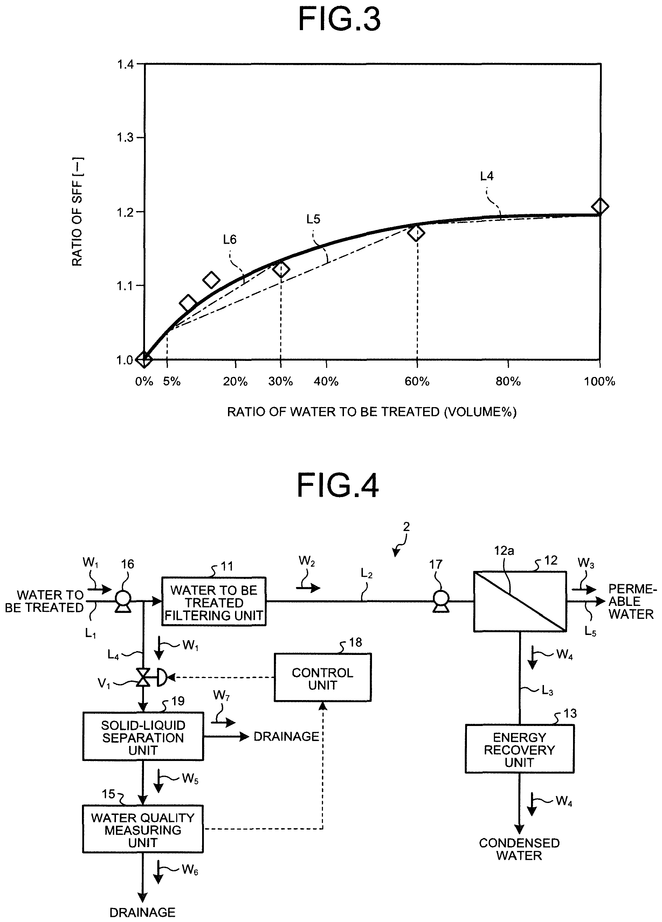

Here, with reference to FIGS. 2 and 3, a relation between the ratio of the treated water W₂ in the measured water W₅ and the measured value of the water quality evaluation index value of the measured water W₅ will be described. FIG. 2 is a graph illustrating the relation between the ratio of the treated water W₁ in the measured water W₅ and the SDI value, and FIG. 3 is a graph illustrating the relation between the ratio of the treated water W₁ in the measured water W₅ and the SFF value. In FIG. 2, an abscissa represents the ratio of the treated water W₁ in the measured water W₅, and an ordinate represents the ratio of the SDI value of the measured water W₅ when the SDI value of the filtered water W₂ is set as 1.0. Further, in FIG. 2, the abscissa represents the ratio of the treated water W₁ in the measured water W₅, and the ordinate represents the ratio of the SDI value of the measured water W₅ when the SFF value of the filtered water W₂ is set as 1.0.

As illustrated in FIG. 2, it can be seen that when the treated water W₁ in the measured water W₅ is in the range of more than 60% by volume and equal to or less than 100% by volume, the rate of decrease of the SDI value is small (see an alternate long and short dashed line L1), and the effect of diluting the treated water W₁ with filtered water W₂ to reduce the turbidity concentration is small. Therefore, it is difficult to measure the SDI value, by only adding the filtered water W₂ of 0% by volume or more and 40% by volume or less to the treated water W₁. In contrast, it can be seen that, when the treated water W₁ in the total volume of the measured water W₅ is in the range of 5% by volume or more and 60% by volume or less, the rate of decrease of the SDI value increases (see the alternate long and short dashed line L2), and in the range of 5% by volume or more and 30% by volume or less, the rate of decrease of the SDI value further increases (see the alternate long and short dashed line L3). Therefore, by diluting the treated water W₁ with the filtered water W₂ until the SDI value is in a measurable range in the range of 40% by volume or more to 95% by volume with respect to the total volume of the treated water W₁, it is possible to adjust the measured water W₅ reflecting the water quality of the treated water W₁.

As illustrated in FIG. 3, it can be seen that, when the treated water W₁ in the total volume of the measured water W₅ is in the range of more than 60% by volume and equal to or less than 100% by volume, the rate of decrease of the SFF value is small (see the alternate long and short dashed line L4), and the effect of diluting the treated water W₁ with the filtered water W₂ is small. Therefore, it is difficult to measure the SFF value, by only adding the filtered water W₂ of 0% by volume or more and 40% by volume or less to the total volume of the treated water W₁. In contrast, it can be seen that, when the treated water W₁ in the total volume of the measured water W₅ is in the range of 5% by volume or more to 60% by volume or less, the rate of decrease of the SFF value increases (see the alternate long and short dashed line L5), and in the range of 5% by volume or more and 30% by volume or less, the rate of decrease of the SFF value further increases (see the alternate long and short dashed line L6). Therefore, by diluting the treated water W₁ with the filtered water W₂ until the SFF value is in a measurable range in the range of 40% by volume or more to 95% by volume with respect to the treated water W₁, it is possible to adjust the measured water W₅ reflecting the water quality of the treated water W₁.

From the viewpoint in which the turbidity concentration of the measured water W₅ becomes an appropriate range and more significant water quality evaluation of the treated water W₁ can be performed before the filtration process using the measured water W₅, the mixing ratio between the treated water W₁ and the filtered water W₂ in the filtered water mixing unit 14 is set such that the ratio of the treated water W₁ in the measured water W₅ is preferably 5% by volume or more and 60% by volume or less, and is more preferably 5% by volume or more and 30% by volume or less. If the ratio of the treated water W₁ in the measured water W₅ is 5% by volume or more, the measured water W₅ reflects the water quality of the treated water W₁. If the ratio is 60% by volume or less, the sensitivity of the water quality evaluation index value to the dilution ratio of the treated water W₁ increases, and it is possible to measure the water quality evaluation index value which reflects the water quality of the treated water W₁.

A control unit 18 controls the degree of opening of a valve V₁ provided in the treated water extraction line L₄ and the degree of opening of the valve V₂ provided in the filtered water supply line L₆. The control unit 18 adjusts the ratio of the treated water W₁ in the measured water W₅, by controlling the degrees of opening of the valves V₁ and V₂ based on the measurement result of the water quality evaluation index value in the water quality measuring unit 15. When the measured value of the water quality evaluation index value in the water quality measuring unit 15 is too high, the control unit 18 decreases the degree of opening of the valve V₁ or increases the degree of opening of the valve V₂ to enhance the ratio of the filtered water W₂ in the measured water W₅. Further, when the water quality of the treated water W₁ is not reflected to the measured value of the water quality evaluation index value in the water quality measuring unit 15, the control unit 18 increases the degree of opening of the valve V₁ or decreases the degree of opening of the valve V₂ to reduce the ratio of the filtered water W₂ in the measured water W₅.

Next, the overall operation of the water treatment apparatus 1 according to the present embodiment will be described. The treated water W₁ supplied from the treated water line L₁ by a liquid feeding pump 16 is filtered by the treated water filtering unit 11 to become filtered water W₂, and some of the treated water W₁ is extracted to the treated water extraction line L₄. After the filtered water W₂ passes through a filter member (not illustrated), the filtered water W₂ is pressed by the high-pressure pump 17 and is filtered by the reverse osmosis membrane filtering unit 12 to become permeable water W₃ and concentrated water W₄. Energy of the concentrated water W₄ pressed by the high-pressure pump 17 is recovered by the energy recovery unit 13. This energy is used for driving the high-pressure pump 17 and the like.

Some of the filtered water W₂ is mixed with the treated water W₁ in the filtered water mixing unit 14 via the filtered water supply line L₆ to become the measured water W₅. The water quality of the measured water W₅ is measured by the water quality measuring unit 15, and the water quality of the treated water W₁ is evaluated. By mixing the treated water W₁ and the filtered water W₂ at a predetermined ratio in this way, it is possible to obtain the water quality evaluation index value which reflects the water quality of the treated water W₁. Accordingly, it is possible to suitably operate and manage the water treatment apparatus 1 depending on the change in the water quality of the treated water W₁. The measured water W₅ after measurement of the water quality using the water quality measuring unit 15 is discharged as drainage W₆.

As described above, according to the water treatment apparatus 1 of the present embodiment, the water quality is measured, using the measured water W₅ in which the turbidity concentration of the treated water W₁ is reduced by mixing the treated water W₁ with the filtered water W₂. Accordingly, it is possible to obtain a water quality evaluation index value which reflects the water quality of the treated water W₁. As a result, the water treatment apparatus 1 can rapidly change the filtration conditions and the like of the treated water filtering unit 11 depending on the change in the water quality of the treated water W₁. Accordingly, it is possible to stabilize the water quality of the filtered water W₂.

Further, in the above-described embodiment, although an example in which the energy recovery unit 13 is provided at the rear stage of the reverse osmosis membrane filtering unit 12 has been described, there is no need to necessarily provide the energy recovery unit 13. Further, the energy recovery unit 13 may be provided as necessary.

Further, in the above-described embodiment, an example has been described in which some of the filtered water W₂ is mixed with the treated water W₁ by the filtered water supply line L₆ to adjust the measured water W₅ in which the turbidity concentration of the treated water W₁ is reduced. However, as the filtered water W₂ to be mixed with the treated water W₁, some of the permeable water W₃ and the concentrated water W₄ may be used. By adjusting the measured water W₅ using the concentrated water W₄ in place of the filtered water W₂, the production efficiency of the permeable water W₃ is improved.

### (Second Embodiment)

Next, a second embodiment of the present invention will be described. In the following description, differences from the aforementioned first embodiment will be mainly described, and the repeated description will not be provided.

FIG. 4 is a schematic view of a water treatment apparatus 2 according to the second embodiment of the present invention. As illustrated in FIG. 4, the water treatment apparatus 2 according to the present embodiment is not provided with the filtered water supply line L₆ of the water treatment apparatus 1 according to the aforementioned first embodiment, and is provided with a solid-liquid separation unit (pretreatment unit) 19 in place of the filtered water mixing unit 14. The solid-liquid separation unit 19 includes, for example, a liquid cyclone equipped with a cylindrical vessel. The solid-liquid separation unit 19 supplies the treated water W₁ containing turbidity of fine particles of several µm or more into the cylindrical vessel to generate rotational movement and exert centrifugal force, thereby performing sediment separation and concentration of the turbidity. That is, the water treatment apparatus 2 according to the present embodiment adjusts the measured water W₅ reflecting the water quality of the treated water W₁, by extracting some of the treated water W₁ from the treated water extraction line L₄ and by performing the solid-liquid separation of the turbidity from the treated water W₁ by the solid-liquid separation unit 19 to reduce the concentration of the turbidity.

As the solid-liquid separation unit 19, it is preferable to use a unit having a separation efficiency of the turbidity concentration in the treated water W₁ of 60% or more. As a result, since the turbidity concentration of the measured water W₅ is in an appropriate range, it is possible to more significantly measure the water quality of the treated water W₁ before the filtration process using the measured water W₅.

Next, the overall operation of the water treatment apparatus 2 according to the present embodiment will be described. The treated water W₁ supplied from the treated water line L₁ by the liquid feeding pump 16 is filtered by the treated water filtering unit 11 to become the filtered water W₂, and some of the filtered water W₂ is extracted to the treated water extraction line L₄. The turbidity is separated from the treated water W₁ extracted to the treated water extraction line L₄ by the solid-liquid separation unit 19, the turbidity concentration is adjusted to a predetermined range, and the treated water W₁ becomes the measured water W₅. The water quality of the measured water W₅ is measured by the water quality measuring unit 15. The treated water W₁ in which the turbidity separated by the solid-liquid separation unit 19 is concentrated is discharged as drainage W₇.

As described above, according to the water treatment apparatus 2 of the present embodiment, since the water quality is measured by using the measured water W₅ in which the turbidity concentration of the treated water W₁ is reduced by the solid-liquid separation using the solid-liquid separation unit 19, it is possible to easily obtain a water quality evaluation index value which reflects the water quality of the treated water W₁. As a result, since the water treatment apparatus 2 can rapidly change the filtration condition of the treated water filtering unit 11 depending on the change in the water quality of the treated water W₁, the water quality of the filtered water W₂ can be stabilized.

In the aforementioned embodiment, although an example in which a liquid cyclone is used as the solid-liquid separation unit 19 has been described, the solid-liquid separation unit 19 is not limited to a liquid cyclone. As the solid-liquid separation unit 19, various solid-liquid separation devices can be applied as long as the measured water W₅ can be obtained by separating the turbidity and the liquid in the treated water W₁.

### (Third Embodiment)

Next, a third embodiment of the present invention will be described. In the following description, differences from the above-described second embodiment will be mainly described, and the repeated description will not be provided.

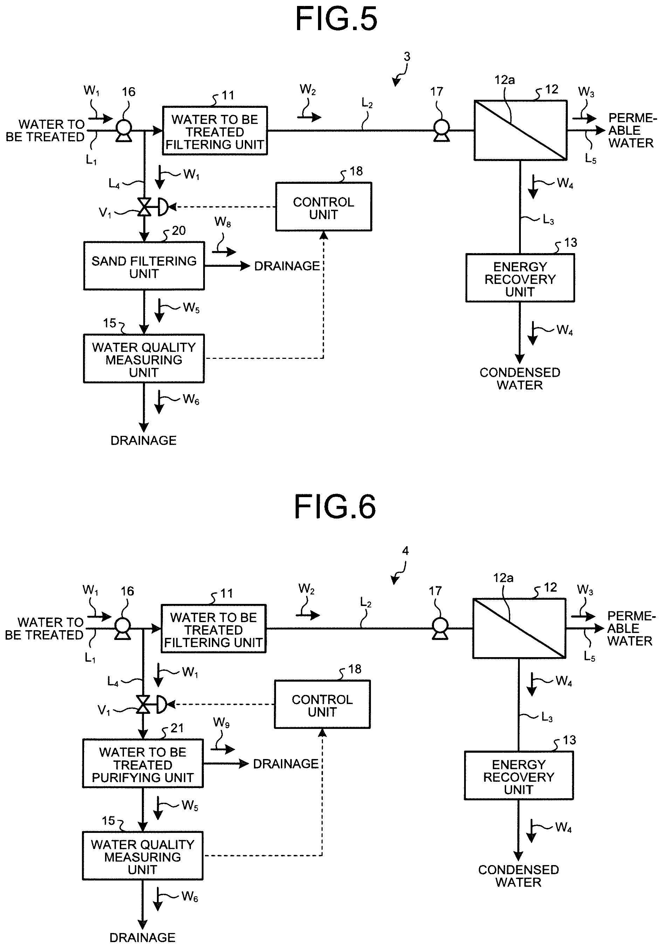

FIG. 5 is a schematic view of a water treatment apparatus 3 according to a third embodiment of the present invention. As illustrated in FIG. 5, the water treatment apparatus 3 according to this embodiment is provided with a sand filtering unit (pretreatment unit) 20 in place of the solid-liquid separation unit 19 of the water treatment apparatus 2 according to the aforementioned second embodiment. The sand filtering unit 20 reduces the turbidity of the treated water W₁ extracted to the treated water extraction line L₄ by the sand filtration. The sand filtering unit 20 is a small sand filtering device having a relatively lower filtration performance than the treated water filtering unit 11, and enables high speed filtration from the treated water filtering unit 11. As a result, since it is possible to rapidly filter the treated water W₁ to adjust the measured water W₅ with reduced turbidity, it is possible to rapidly obtain the measured water W₅ which reflects the water quality of the treated water W₁.

As the sand filtering unit 20, it is preferable that the filtration performance is 40% or more and 95% or less with respect to the treated water filtering unit 11. If the filtration performance for the treated water filtering unit 11 is 40% or more, the sand filtering unit 20 can measure the water quality evaluation index value which reflects the water quality of the treated water W₁. Further, if the filtration performance for the treated water filtering unit 11 is 95% or less, the sand filtering unit 20 can rapidly obtain the measured water W₅.

Next, the overall operation of the water treatment apparatus 3 according to the present embodiment will be described. The treated water W₁ supplied from the treated water line L₁ by the liquid feeding pump 16 is filtered by the treated water filtering unit 11 to become the filtered water W₂, and some thereof is extracted to the treated water extraction line L₄. The turbidity is separated from the treated water W₁ extracted to the treated water extraction line L₄ by the sand filtering unit 20, the turbidity concentration is adjusted to a predetermined range, and the treated water W₁ becomes the measured water W₅. The water quality of the measured water W₅ is measured by the water quality measuring unit 15. The treated water W₁ in which the turbidity separated by the sand filtering unit 20 is concentrated is discharged as drainage W₈.

As described above, according to the water treatment apparatus 3 of the present embodiment, since the water quality is measured using the measured water W₅ in which the turbidity concentration of the treated water W₁ is reduced by the sand filtration using the sand filtering unit 20, it is possible to obtain a water quality evaluation index value which reflects the water quality of the treated water W₁. As a result, since the water treatment apparatus 3 can rapidly change the filtration condition of the treated water filtering unit 11 depending on the change in the water quality of the treated water W₁, the water quality of the filtered water W₂ can be stabilized.

### (Fourth Embodiment)

Next, a fourth embodiment of the present invention will be described. In the following description, differences from the aforementioned third embodiment will be mainly described, and the repeated description will not be provided.

FIG. 6 is a schematic view of a water treatment apparatus 4 according to a fourth embodiment of the present invention. As illustrated in FIG. 6, the water treatment apparatus 4 according to the present embodiment is provided with a treated water purifying unit (pretreatment unit) 21 in place of the sand filtering unit 20 of the water treatment apparatus 3 according to the aforementioned third embodiment. The treated water purifying unit 21 is a bubbling-type small purifying tank, and temporarily stores the treated water W₁ extracted to the treated water extraction line L₄ and blows air, thereby reducing the turbidity concentration in the treated water W₁. As a result, since it is possible to rapidly filter the treated water W₁ to adjust the measured water W₅ with reduced turbidity, it is possible to rapidly obtain the measured water W₅ reflecting the water quality of the treated water W₁. The treated water purifying unit 21 is not particularly limited as long as it is possible to reduce the turbidity concentration in the treated water W₁.

Next, the overall operation of the water treatment apparatus 4 according to the present embodiment will be described. The treated water W₁ supplied from the treated water line L₁ by the liquid feeding pump 16 is filtered by the treated water filtering unit 11 to become the filtered water W₂, and some thereof is extracted to the treated water extraction line L₄. The turbidity is separated from the treated water W₁ extracted to the treated water extraction line L₄ by the treated water purifying unit 21, the turbidity concentration is adjusted to a predetermined range, and the treated water W₁ becomes the measured water W₅. The water quality of the measured water W₅ is measured by the water quality measuring unit 15. The overflow water of the treated water purifying unit 21 is discharged as drainage W₉.

As described above, according to the water treatment apparatus 4 of the present embodiment, since the water quality is measured using the measured water W₅ in which the turbidity concentration of the treated water W₁ is reduced by the treated water purifying unit 21, it is possible to obtain a water quality evaluation index value which reflects the water quality of the treated water W₁. As a result, since the water treatment apparatus 4 can rapidly change the filtration condition of the treated water filtering unit 11 depending on the change in the water quality of the treated water W₁, the water quality of the filtered water W₂ can be stabilized.

In the above-described embodiment, an example in which a bubbling-type water purifying device is used as the treated water purifying unit 21 has been described. However, various kinds of water purifying devices can be applied, as long as the treated water purifying unit 21 reduces the turbidity in the treated water W₁ and the measured water W₅ can be obtained.

### (Fifth Embodiment)

Next, a fifth embodiment of the present invention will be described. In the following description, differences from the above-described first embodiment will be mainly described, and the repeated description will not be provided.

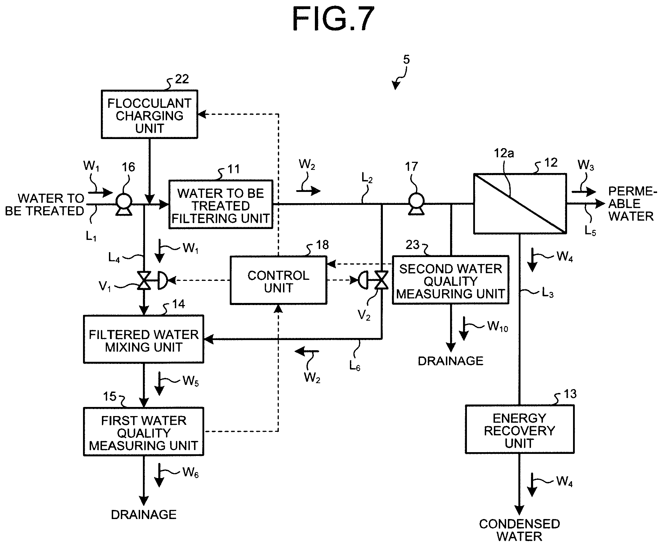

FIG. 7 is a schematic view of a water treatment apparatus 5 according to a fifth embodiment of the present invention. As illustrated in FIG. 7, in addition to the configuration of the water treatment apparatus 1 according to the above-described first embodiment, the water treatment apparatus 5 according to the present embodiment includes an flocculant charging unit 22 provided at the front stage of the treated water filtering unit 11 of the treated water line L₁, and a second water quality measuring unit 23 provided in the filtered water line L₂ of the rear stage of the treated water filtering unit 11.

The flocculant charging unit 22 charges an aluminum salt flocculant, such as aluminum sulfate (Al₂(SO₃)₂) and polyaluminum chloride, an iron salt flocculant such as ferric chloride (FeCl₃), inorganic polymer-based flocculant such as active silicic acid and polysilica iron, and an organic polymer-based flocculant such as sodium alginate, carboxymethyl-cellulose (CMC) sodium, sodium polyacrylate, partially hydrolyzed salts of polyacrylamide and maleic acid copolymer into the treated water W₁ to set the concentration of the flocculant in the treated water W₁ within a predetermined range. As a result, since the turbidity in the treated water W₁ is aggregated, the turbidity in the treated water W₁ can be efficiently removed by the treated water filtering unit 11.

The second water quality measuring unit 23 measures the water quality of the filtered water W₂ to calculate the water quality evaluation index value, and evaluates the water quality of the treated water W₁ based on the calculated water quality evaluation index value. As the water quality evaluation index value, for example, a silt density index (SDI) value and a soluble fouling factor (SFF) can be included, as in the first water quality measuring unit 15.

In the present embodiment, the control unit 18 controls the amount of the flocculant to be charged into the treated water W₁ from the flocculant charging unit 22, based on the water quality of the measured water W₅ measured by the first water quality measuring unit 15 and the water quality of the filtered water W₂ measured by the second water quality measuring unit 23. When the water quality of the measured water W₅ measured by the first water quality measuring unit 15 exceeds a predetermined threshold value, the control unit 18 increases the amount of the flocculant which is charged into the treated water W₁ from the flocculant charging unit 22. Further, when the water quality of the measured water W₅ measured by the first water quality measuring unit 15 is equal to or lower than a predetermined threshold value and the water quality of the filtered water W₂ measured by the second water quality measuring unit 23 exceeds a predetermined threshold value, the control unit 18 increase the amount of the flocculant which is charged into the treated water W₁ from the flocculant charging unit 22. Furthermore, when the water quality of the measured water W₅ measured by the first water quality measuring unit 15 is equal to or less than a predetermined threshold value and the water quality of the filtered water W₂ measured by the second water quality measuring unit 23 is equal to or less than a predetermined threshold value, the control unit 18 maintains or decreases the amount of the flocculant which is charged into the treated water W₁ from the flocculant charging unit 22.

Next, the overall operation of the water treatment apparatus 5 according to the present embodiment will be described. After some of the treated water W₁ supplied from the treated water line L₁ by the liquid feeding pump 16 is extracted to the treated water extraction line L₄, a predetermined amount of the flocculant is added to the treated water W₁ from the flocculant charging unit 22, and the treated water W₁ becomes the filtered water W₂ filtered by the treated water filtering unit 11. After flowing through a filter member (not illustrated), the filtered water W₂ is pressed by the high-pressure pump 17 and is filtered by the reverse osmosis membrane filtering unit 12, and then becomes the permeable water W₃ and the concentrated water W₄. Here, in the present embodiment, the water quality of the filtered water W₂ is measured by the second water quality measuring unit 23. The filtered water W₂ used for measuring the water quality is discarded as the drainage W₁₀. Energy of the concentrated water W₄ pressed by the high-pressure pump 17 is recovered by the energy recovery unit 13. The energy is used for driving the high-pressure pump 17 and the like.

Some of the filtered water W₂ is mixed with the treated water W₁ in the filtered water mixing unit 14 via the filtered water supply line L₆ to become the measured water W₅. The water quality of the measured water W₅ is measured by the first water quality measuring unit 15. When the treated water W₁ and the filtered water W₂ are mixed with each other at a predetermined ratio, it is possible to obtain the water quality evaluation index value which reflects the water quality of the treated water W₁. Accordingly, it is possible to appropriately operate and manage the water treatment apparatus 5, depending on the change in the water quality of the treated water W₁. The measured water W₅ after the water quality is measured by the first water quality measuring unit 15 is discharged as drainage W₆.

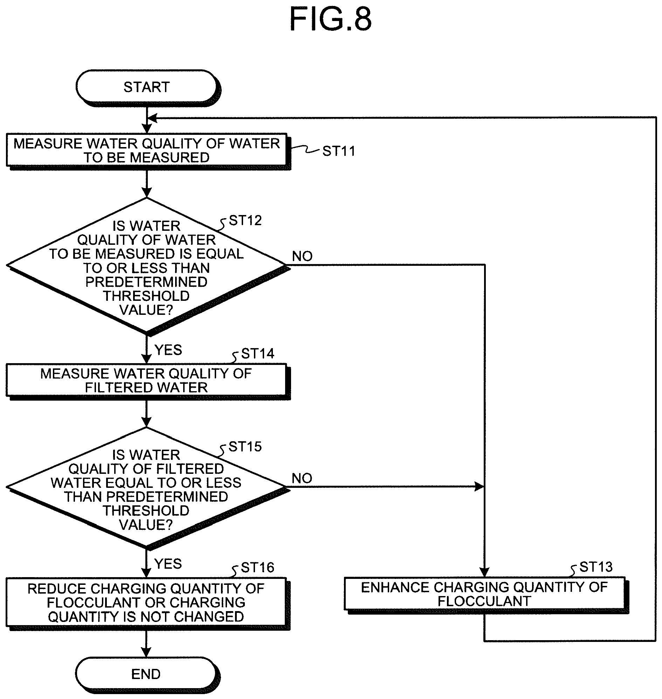

Next, the method of operating the water treatment apparatus 5 according to the present embodiment will be described in detail with reference to FIG. 8. FIG. 8 is a flowchart of the method of operating the water treatment apparatus 5 according to the present embodiment.

As illustrated in FIG. 8, after starting the operation of the water treatment apparatus 5, the water quality of the measured water W₅ in which the treated water W₁ and the filtered water W₂ are mixed with each other at a predetermined ratio is measured by the first water quality measuring unit 15 (Step ST11). When the water quality of the measured water W₅ exceeds a predetermined threshold value (step ST12: No), the control unit 18 increases the charging amount of flocculant from the flocculant charging unit 22 (step ST13). Further, when the measured water quality of the measured water W₅ is equal to or lower than the predetermined threshold value (step ST12: Yes), the water quality of the filtered water W₂ is measured by the second water quality measuring unit 23 (step ST14). When the measured water quality of the filtered water W₂ exceeds a predetermined threshold value (step ST15: No), the control unit 18 increases the charging amount of the flocculant from the flocculant charging unit 22 (step ST13). Further, when the measured water quality of the filtered water W₂ is equal to or less than the predetermined threshold value (step ST15: Yes), the control unit 18 maintains or decreases the charging amount of the flocculant from the flocculant charging unit 22 (step ST16).

As described above, according to the water treatment apparatus 5 of the present embodiment, by mixing with the filtered water W₂, the water quality is measured using the measured water W₅ in which the turbidity concentration of the treated water N₁ is reduced. Accordingly, it is possible to obtain a water quality evaluation index value which reflects the water quality of the treated water W₁. As a result, the water treatment apparatus 5 can appropriately control the adding amount of the flocculant from the flocculant charging unit 22 to the filtered water W₂ depending on the change in the water quality of the treated water W₁. Accordingly, it is possible to rapidly change the filtration conditions of the treated water filtering unit 11, and it is possible to stabilize the water quality of the filtered water W₂ to prevent contamination of the reverse osmosis membrane 12a of the reverse osmosis membrane filtering unit 12.

### (Sixth Embodiment)

Next, a sixth embodiment of the present invention will be described. In the following description, differences from the above-described second embodiment will be mainly described, and the repeated description will not be provided.

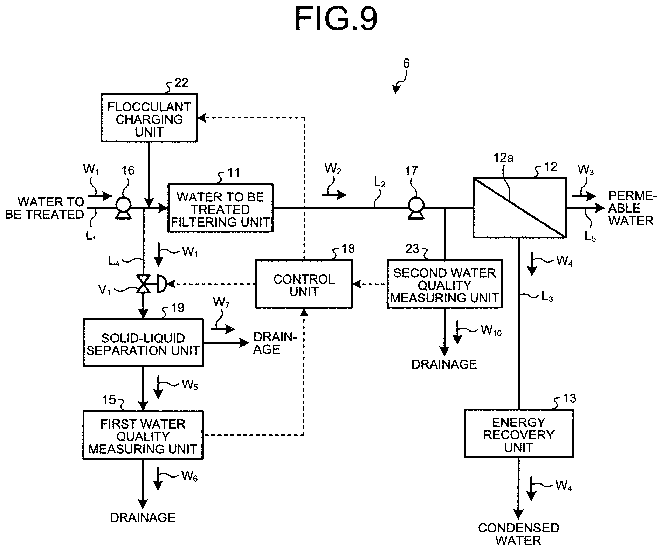

FIG. 9 is a schematic view of a water treatment apparatus 6 according to a sixth embodiment of the present invention. As illustrated in FIG. 9, in addition to the configuration of the water treatment apparatus 2 according to the above-described second embodiment, the water treatment apparatus 6 includes the configurations of the flocculant charging unit 22 and the second water quality measuring unit 23 of the water treatment apparatus 5 according to the fifth embodiment. Since other configurations are the same as those of the water treatment apparatus 2 according to the second embodiment and the water treatment apparatus 5 according to the fifth embodiment, the description thereof will not be provided.

According to the water treatment apparatus 6 according to the present embodiment, the water quality is measured using the measured water W₅ in which the turbidity concentration of the treated water W₁ is reduced by the solid-liquid separation unit 19. Accordingly, it is possible to obtain a water quality evaluation index value that reflects the water quality of the treated water W₁. As a result, the water treatment apparatus 6 can appropriately control the adding amount of the flocculant to from the flocculant charging unit 22 to the filtered water W₂ depending on the change in the water quality of the treated water W₁. Accordingly, it is possible to rapidly change the filtration conditions of the treated water filtering unit 11, and it is possible to stabilize the water quality of the filtered water W₂ to prevent contamination of the reverse osmosis membrane 12a of the reverse osmosis membrane filtering unit 12.

### (Seventh Embodiment)

Next, a seventh embodiment of the present invention will be described. In the following description, differences from the aforementioned third embodiment will be mainly described, and the repeated description will not be provided.

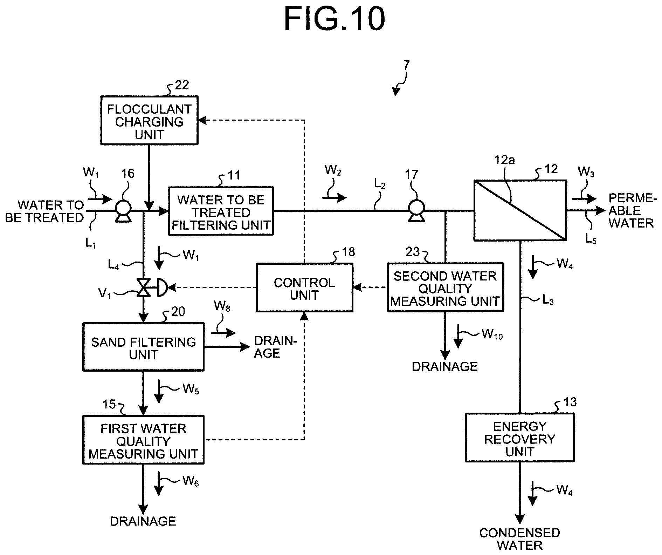

FIG. 10 is a schematic view of a water treatment apparatus 7 according to a seventh embodiment of the present invention. As illustrated in FIG. 10, in addition to the configuration of the water treatment apparatus 3 according to the above-described third embodiment, the water treatment apparatus 7 according to the present embodiment includes the configurations of the flocculant charging unit 22 and the second water quality measuring unit 23 of the water treatment apparatus 5 according to the fifth embodiment. Since other components are the same as those of the water treatment apparatus 3 according to the third embodiment and the water treatment apparatus 5 according to the fifth embodiment, the description thereof will not be provided.

According to the water treatment apparatus 7 according to the present embodiment, since the water quality is measured using the measured water W₅ in which the turbidity concentration of the treated water W₁ is reduced by the sand filtering unit 20, it is possible to obtain a water quality evaluation index value which reflects the water quality of the treated water W₁. This allows the water treatment apparatus 7 to appropriately control the adding amount of the flocculant from the flocculant charging unit 22 to the filtered water W₂ depending on the change in the water quality of the treated water W₁. Accordingly, it is possible to rapidly change the filtration conditions of the treated water filtering unit 11, and it is possible to stabilize the water quality of the filtered water W₂ to prevent contamination of the reverse osmosis membrane 12a of the reverse osmosis membrane filtering unit 12.

### (Eighth Embodiment)

Next, an eighth embodiment of the present invention will be described. In the following description, differences from the above-described fourth embodiment will be mainly described, and the repeated description will not be provided.

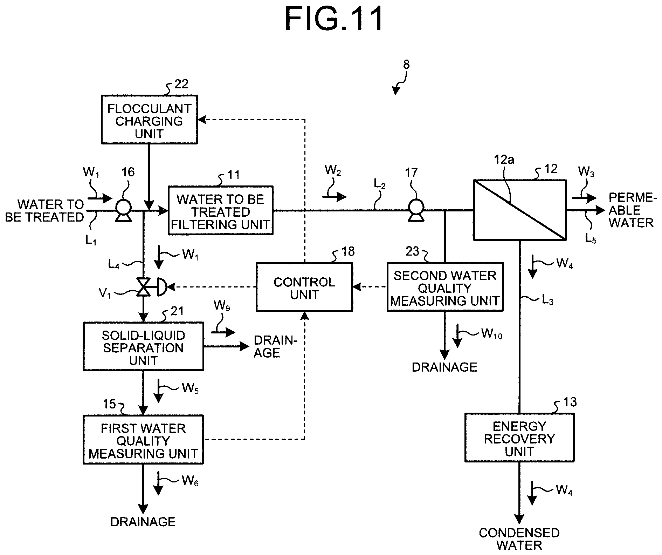

FIG. 11 is a schematic view of a water treatment apparatus 8 according to an eighth embodiment of the present invention. As illustrated in FIG. 11, in addition to the configuration of the water treatment apparatus 4 according to the above-described fourth embodiment, the water treatment apparatus 8 according to the present embodiment includes configurations of the flocculant charging unit 22 and the second water quality measuring unit 23 of the water treatment apparatus 5 according to the fifth embodiment. Since other configurations are the same as those of the water treatment apparatus 2 according to the second embodiment and the water treatment apparatus 5 according to the fifth embodiment, the description thereof will not be provided.

According to the water treatment apparatus 8 according to the present embodiment, the water quality is measured using the measured water W₅ in which the turbidity concentration of the treated water N₁ is reduced by the treated water purifying unit 21. Accordingly, it is possible to obtain a water quality evaluation index value which reflects the water quality of the treated water W₁. As a result, since the water treatment apparatus 8 can rapidly change the filtration condition of the treated water filtering unit 11 depending on the change in the water quality of the treated water W₁, the water quality of the filtered water W₂ can be stabilized.

### Reference Signs List

1, 2, 3, 4, 5, 6, 7, 8 WATER TREATMENT APPARATUS
11 TREATED WATER FILTERING UNIT
12 REVERSE OSMOSIS MEMBRANE FILTERING UNIT
12a REVERSE OSMOSIS MEMBRANE
13 ENERGY RECOVERY UNIT
14 FILTERED WATER MIXING UNIT (PRETREATMENT UNIT)
15 WATER QUALITY MEASURING UNIT (FIRST WATER QUALITY MEASURING UNIT)
16 LIQUID FEEDING PUMP
17 HIGH-PRESSURE PUMP
18 CONTROL UNIT
19 SOLID-LIQUID SEPARATION UNIT (PRETREATMENT UNIT)
20 SAND FILTERING UNIT (PRETREATMENT UNIT)
21 TREATED WATER PURIFYING UNIT (PRETREATMENT UNIT)
22 FLOCCULANT CHARGING UNIT
23 SECOND WATER QUALITY MEASURING UNIT
L₁ TREATED WATER LINE
L₂ FILTERED WATER LINE
L₃ CONCENTRATED WATER LINE
L₄ TREATED WATER EXTRACTION LINE
L₅ PERMEABLE WATER LINE
L₆ FILTERED WATER SUPPLY LINE
W₁ TREATED WATER
W₂ FILTERED WATER
W₃ PERMEABLE WATER
W₄ CONCENTRATED WATER
W₅ MEASURED WATER
W₆ to W₁₀ DRAINAGE

## Claims

1. A water treatment apparatus comprising:
a treated water filtering unit which filters treated water to be supplied from a treated water line to become filtered water;
a pretreatment unit which is provided in a treated water extraction line diverging from the treated water line to reduce a turbidity concentration in the treated water of the treated water extraction line to become measured water; and
a first water quality measuring unit which is provided at a rear stage of the pretreatment unit in the treated water extraction line to measure the water quality of the measured water and evaluate the water quality of the treated water.

2. The water treatment apparatus according to claim 1, further comprising:
a reverse osmosis membrane filtering unit which filters the filtered water with a reverse osmosis membrane to obtain permeable water and concentrated water.

3. The water treatment apparatus according to claim 1 or 2, wherein the pretreatment unit is a filtered water mixing unit which mixes the filtered water with the treated water to convert the treated water into the measured water.

4. The water treatment apparatus according to claim 3, wherein the measured water is a mixture of the treated water and the filtered water such that the treated water has 5 volume% or more and 60 volume% or less.

5. The water treatment apparatus according to claim 1 or 2, wherein the pretreatment unit is a solid-liquid separation unit which performs solid-liquid separation of the liquid in the treated water and the turbidity in the treated water to convert the treated water into the measured water.

6. The water treatment apparatus according to claim 5, wherein the solid-liquid separation unit has a separation efficiency of the turbidity of 60% or more.

7. The water treatment apparatus according to claim 1 or 2, wherein the pretreatment unit is a sand filtering unit which converts the treated water into the measured water, by sand filtration in which a filtration rate is relatively higher than the treated water filtering unit.

8. The water treatment apparatus according to claim 1 or 2, wherein the pretreatment unit is a treated water purifying unit which reduces turbidity in the treated water by bubbling to convert the treated water into the measured water.

9. The water treatment apparatus according to any one of claims 1 to 8, further comprising:
a flocculant charging unit which charges a flocculant into the treated water;
a second water quality measuring unit which measures the water quality of the filtered water; and
a control unit which controls a charging amount of the flocculant, based on the water quality of the treated water evaluated by the first water quality measuring unit and the water quality of the filtered water measured by the second water quality measuring unit.

10. A water treatment method comprising:
reducing a turbidity concentration in treated water of a treated water extraction line diverging from a treated water line to become measured water;
measuring the water quality of the measured water to evaluate the water quality of the treated water;
controlling a charging amount of an flocculant to the treated water based on the evaluated water quality of the treated water; and
measuring the water quality of the filtered water obtained by filtering the treated water of the treated water line to control a charging amount of the flocculant to the treated water.
